# EUROPEAN PATENT SPECIFICATION

(11) **EP 2 513 563 B1**
(45) Date of publication and mention of the grant of the patent: **10.08.2016**
(21) Application number: 10787777.1
(22) Date of filing: 09.12.2010
(51) Int. Cl.: F23R 3/60, F01D 9/02, F02C 7/20, B32B 5/16, B32B 15/04

(54) **TUNGSTEN CARBIDE INSERTS FOR A GAS TURBINE LINER AND METHOD**
WOLFRAMCARBIDEINSÄTZE FÜR EINE GASTURBINENAUSKLEIDUNG UND VERFAHREN
INSERT EN CARBURE DE TUNGSTÈNE POUR UNE VIROLE D'UNE TURBINE À GAZ ET PROCÉDÉ ASSOCIÉ

(30) Priority: 15.12.2009 IT CO20090065
(43) Date of publication of application: 24.10.2012
(73) Proprietor: Nuovo Pignone S.p.A., 50127 Florence (IT)
(72) Inventor: GIANNOZZI, Massimo, I-50127 Firenze (IT); DEL PUGLIA, Eugenio, I-50127 Firenze (IT); ROMANELLI, Marco, I-50127 Firenze (IT); CAPPUCCINI, Filippo, I-50127 Firenze (IT); PIETRANGELI, Emanuele, I-50127 Firenze (IT)
(74) Representative: Illingworth-Law, William Illingworth
(86) International application number: PCT/EP2010/069239
(87) International publication number: WO 2011/073075

(56) References cited:
- EP-A2- 1 754 860
- FR-A1- 2 924 465
- US-A- 5 273 249
- US-A- 5 749 218
- US-A1- 2005 000 225
- US-A1- 2009 101 788

## Description

### TECHNICAL FIELD

The embodiments of the subject matter disclosed herein generally relate to wear protection and more particularly to adding inserts to combustion hardware in gas turbine systems.

### BACKGROUND

Combustors are used in a gas turbine to deliver hot combustion gases to a first stage of a turbine. Each combustor used in the system typically includes a fuel injection system with one or more fuel nozzles and a combustion chamber. A typical combustion chamber may include a combustor liner, a transition piece which is connected to and extends between the combustion chamber and the first stage of the turbine, and a flow sleeve. A passage is created between the combustor liner and the flow sleeve which allows at least a portion of the compressor discharge air to be introduced into the combustor liner for mixing with the fuel injected into the system through the fuel nozzles and for cooling purposes. Additionally, the transition piece directs and delivers the hot combustion gases to the first stage of the turbine for power generation and expansion.

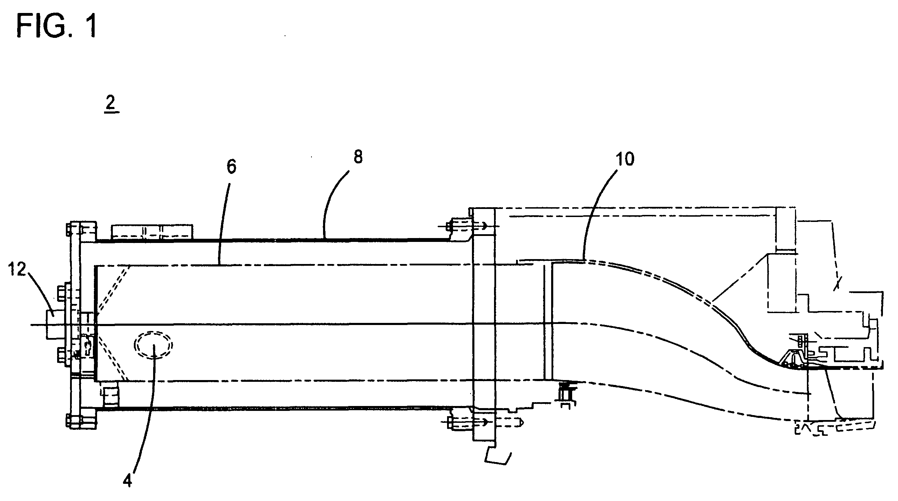

More specifically, a combustor and its associated transition piece are described with respect to Figure 1. A combustor 2 for use in a gas turbine has a combustion chamber 4, which is inside of a combustion liner 6 which may be cylindrical in shape. Fuel enters the combustor chamber 4 via a nozzle(s) 12. The combustor liner 6 is surrounded by a substantially cylindrical flow sleeve 8. However, a radial gap exists between the combustor liner 6 and the cylindrical flow sleeve 8 which acts as an air flow passage to introduce air into the combustion chamber 4 to be mixed with the fuel delivered through the fuel nozzle 12. A transition piece 10 connects the combustor liner 6 with a first stage of a turbine (not shown). More information regarding a combustor for use in a gas turbine can be found in U.S. Patent Number 5,749,218, entitled "Wear Reduction Kit for Gas Turbine Combustors".

The document US 5 273 249 A shows a tungsten carbide wear reduction coating without a matrix material in a gas turbine. The document FR 2 924 465 A1 discloses turbine stator vanes made of tungsten carbide in a matrix material, but no brazed coating. The document EP 1 754 860 A2 shows a tungsten carbide in matrix material coating not brazed to a support structure, but applied to it via typical surface deposition methods.

During operation, some combustion parts are affected by wear induced by, for example, hardware vibrations. This wear generates maintenance and expense costs related to downtime and replacement parts. One method for reducing wear of combustion parts in a gas turbine is spray coating. For example, high velocity oxygen fuel (HVOF) coatings have been used to improve the wear characteristics on parts which have been found to have wear damage. These spray coatings, while improving wear characteristics, are not able to provide, or cost effectively provide, a thick coating and instead are typically used in applications of coatings of approximately 0.5 mm or less in thickness. Additionally, these spray coating mechanisms are performed at approximately a 90° angle to the desired coating surface. Some part geometries that it is desirable to coat, e.g., corners and various curves, do not allow for the required inclination (between the coating spray nozzle and the part surface) to be achieved which results in either a thin coating or possibly no coating at all.

Accordingly, systems and methods for reducing wear and increasing the lifetime of parts associated with the gas turbine combustor and reducing costs are desirable.

### SUMMARY

The present invention provides a system and method as defined in the accompanying claims.

### BRIEF DESCRIPTION OF THE DRAWINGS

The accompanying drawings illustrate exemplary embodiments, wherein:
Figure 1 depicts a traditional combustor and a transition piece;
Figure 2 illustrates an H-block attached to a flange according to exemplary embodiments;
Figure 3 shows a support piece and fingers according to exemplary embodiments;
Figure 4 illustrates a combustor liner and a combustor liner stop according to exemplary embodiments;
Figure 5 shows a combustor liner stop and its mating piece according to exemplary embodiments;
Figure 6 shows an H-block with inserts according to an exemplary embodiment;
Figure 7 illustrates a combustor liner stop with an insert according to exemplary embodiments;
Figure 8 shows an H-block with a tape-like substance covering a wear area according to exemplary embodiments; and
Figure 9 is a flowchart illustrating a method for reducing wear according to exemplary embodiments.

### DETAILED DESCRIPTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

As previously described, various parts of the combustor can experience wear over time caused by, for example, vibration, when the gas turbine is in use. Examples of wear locations include, but are not limited to, various connectors, connection points and stops (see Figure 1) associated with the components of the combustor liner 6 and the transition piece 10, which are used in attaching the two components, as well as the mating points between the combustor liner 6 and the flow sleeve 8. More specifically, stops can be used to position, secure and ensure the desired radial spacing between the combustor liner 6 and the flow sleeve 8 at one end of the combustor liner 6. An H-block connected to fingers is used at the other end of the combustor liner 6 to connect the combustor liner 6 with the transition piece 10. The H-block is also referred to herein as a "substantially H-shaped block" and an "H-shaped block". Additionally, methods and systems for connecting these parts are generally known in the art, see, e.g., U.S. Patent Number 5,749,218 , and as such only an overview of the connection points is described to present context for the exemplary embodiments described herein.

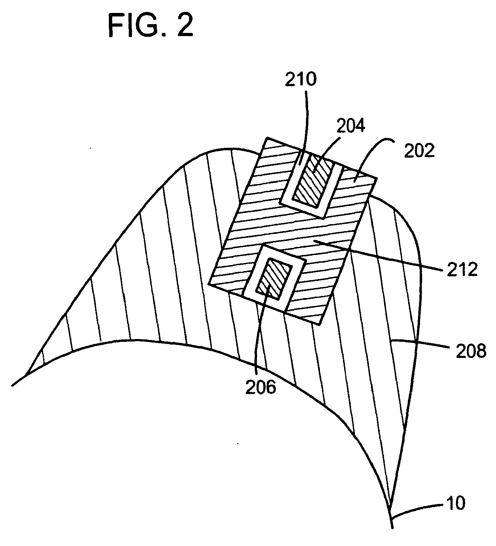

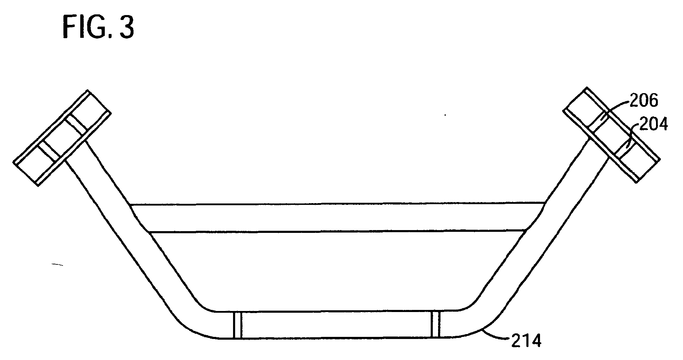

According to exemplary embodiments, the wear characteristics of these contact points can be modified such that their useful lifetime is extended. Prior to discussing these exemplary embodiments, Figures 2-5 will be described to provide context with respect to the components which tend to wear in a gas turbine combustion system. Initially, as seen in Figure 2, the transition piece 10 can have a flanged section 208 which has an opening 210. Within the opening 210 and attached to the flanged section 208 is an H-shaped block 202. The H-shaped block 202 can be attached to the flanged section 208 in various ways, such as, welding. While Figure 2 shows only a single H-shaped block 202 and a single flanged section 208, there may be two of these pieces/sections attached to the transition piece 10. Fingers 204 and 206 are slidably received within the H-shaped block 202 such that the opposed facing surfaces of the finger elements can engage opposite sides of the cross piece 212 of the H-shaped block 202. As shown in Figure 3, fingers 204 and 206 are attached to a structural member 214 which is attached to a casing (not shown) which holds the combustor liner 6. Wear can occur on the interior surfaces of the H-shaped block 202 where the fingers 204 and 206 could rub or vibrate. Wear can also occur on the facing surfaces of the fingers 204 and 206 that contact the interior surfaces of the H-shaped block.

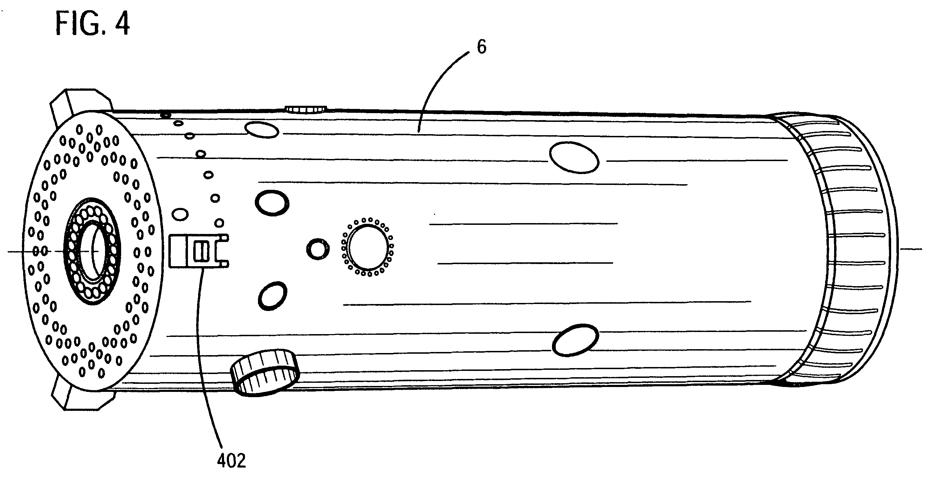

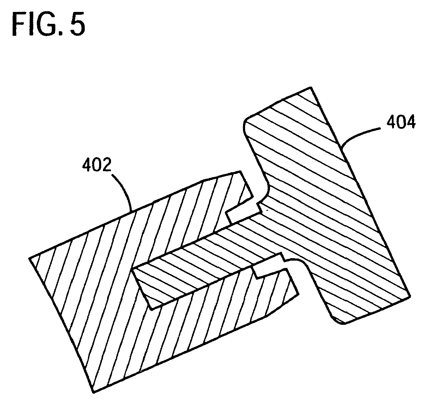

Figure 4 shows the combustor liner 6 with an attached combustor liner stop 402. Numerous combustor liner stops 402 can be attached to the combustor liner 6 to position the combustor liner as desired. Figure 5 shows the combustor liner stop 402 and a male mating piece 404. The male mating piece is attached to the inside of the flow sleeve 8. Where these two pieces mate are also locations where wear can occur during operation of the combustor 2. Additionally, the H-shaped blocks 202, the combustor liner stops 402 and their respective mating pieces can be made from a Cobalt based super alloy, e.g., L-605 or Hynes 25.

When in operation some of the various wear components in a combustor 2 can have a relatively short life time which results in a higher than desired frequency of inspection and replacement. According to exemplary embodiments, the application of tungsten carbide in a metal matrix, e.g., cobalt or nickel, can increase the wear resistance of the various wear components, thus reducing the frequency of inspection and replacement of various wear components in a gas turbine combustor 2.

The tungsten carbide in a metal matrix is formed into a desired shape for increasing the usable life of the part by, for example, creating a wear surface with a high hardness. For example, appropriate amounts of tungsten carbide in either cobalt or nickel still allow the part to have the desired strength and other material properties while operating at the high temperatures of the combustor. The tungsten carbide in the metal matrix, which is also referred to as a "tungsten carbide insert" or "insert" herein, may be formed through a sintering process. The tungsten carbide inserts start as tungsten carbide powders embedded in the metal matrix. The powder is placed into a die, for shaping the insert as desired. A pressure, e.g., 1000 bar, is applied to the powder and then, while in the die, the pressurized powder undergoes sintering in a furnace at approximately 1200° C. After sintering, the insert can be further modified to achieve the desired shape if needed through various processes, e.g., grinding for shape, size and surface finish. The insert may be then attached to the desired location on the part, e.g., the wear surfaces, through a brazing process using an appropriate brazing material, e.g., a low melting point brazing alloy such as a silver brazing powder, for the tungsten carbide insert and the part. According to other exemplary embodiments, the insert may be mechanically joined to the base piece, e.g., the insert can be bolted to the part.

According to exemplary embodiments, a range of tungsten carbide in the metal matrix can be approximately between 10-20 percent by weight. Considerations for the amount of tungsten carbide to be used in the metal matrix include, but are not limited to, brittleness, ductility and hardness. Additionally, in another exemplary embodiment, the amount of tungsten carbide in the metal matrix is approximately 12 percent by weight.

A die can be used to shape the insert or multiple dies may be used to shape multiple, possibly different, inserts. These inserts can be a single piece or a combination of pieces as desired. Additionally, sintering the tungsten carbide in a metal matrix allows the creation of inserts which are relatively thick, e.g., 1 mm or thicker, as compared to the thickness of the spray coatings, e.g., less than 1 mm but typically less than 0.5 mm, which have been traditionally used. According to another exemplary embodiment, the thickness of the inserts are in a range of 2-4 mm. Also, inserts of various shapes and geometries can be created to cover surfaces in a uniform thickness of the insert, e.g., interior corners of the H-shaped block 202. The H-shaped block 202 is often of the size having a length of about 5.08 cm and a width of about 2.54 cm.

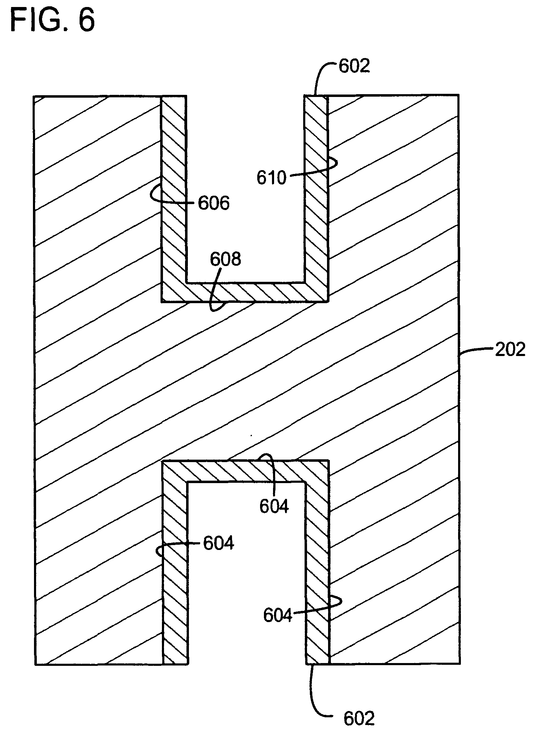

According to an exemplary embodiment, an insert can be attached on the known wear areas of the H-shaped block 202 as shown in Figure 6. The wear surfaces associated with the H-shaped block 202 are the interfaces 604 between the H-shaped block 202 and the insert(s) 602. This wear is caused by the contact and movement between the H-shaped block 202 and the fingers 204, 206 (shown in Figures 2 and 3). Each insert 602 can be placed either as a single roughly U-shaped piece or, for example, as three separate pieces, one per surface. The wear surfaces are the interior surfaces to the H-shaped block 202 and can be described as a first surface 606 substantially perpendicular to a second surface 608 which is substantially perpendicular to a third surface 610, the third surface 610 being substantially parallel to and having a substantially same surface area as the first surface 606. Similar inserts can be placed on the wear surfaces of the fingers 204 and 206.

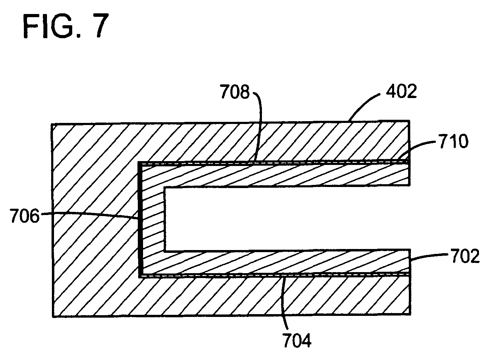

According to another exemplary embodiment, an insert can be attached on the known wear areas of the combustor liner stop 402 as shown in Figure 7. Each insert 702 can be placed either as a single substantially U-shaped piece or, for example, as three separate pieces, one per surface. The wear surfaces are the interior surfaces to the liner stop 402 and can be described as a first surface 704 which is substantially perpendicular to a second surface 706 which is substantially perpendicular to a third surface 708, the third surface 708 being substantially parallel to and having a substantially same surface area as the first surface 704. Similar inserts can be attached to the mating wear surfaces of the male mating piece 404.

Exemplary embodiments described herein can provide an increased wear resistance to the combustion parts without the geometrical limitations associated with spray coating processes. Using sintered carbide, inserts can have a hardness of greater than 1500 HV (Vickers pyramid number) on the various mating surfaces, which lowers the material loss due to the wear phenomena. Regarding various material properties of the inserts, the hardness is mainly driven by the presence of carbides, while the oxidation protection and the cohesion of the insert are provided by the metal matrix. Ductility of the inserts can be modified by changing the chemical composition of the matrix. According to exemplary embodiments, hardness values for the inserts may be in a range from 1000 Vickers to 1800 Vickers, or even more in some cases. A fracture toughness, or ductility, can range from a K_{IC} of 5 to a K_{IC} of 30. According to another exemplary embodiment, the hardness can be approximately 1250 Vickers with a K_{IC} of approximately 20.

Using a low melting point brazing alloy 710, e.g., a silver brazing powder, allows penetration by the brazing alloy 710 into the insert structure, which when the brazing alloy 710 diffuses in the base material 402, creates a metallurgical joining with minimal (or no) porosity and good adhesion between the base material 402 and the inserts 702. Additionally, according to exemplary embodiments, these inserts can be applied to other flat or curved surfaces in a gas turbine or other device, providing that the coefficient of thermal expansion mismatch between the insert and the base material of the part to be protected is within acceptable design limits, e.g., the higher the adhesion achieved, the higher mismatch can be allowed. For example, the coefficient of thermal expansion (CTE) of a base metal is about 14 °C⁻¹ while the CTE for tungsten carbide is around 6 °C⁻¹, however thermal cycling tests have shown that the adhesion is maintained at 400-500 °C which is acceptable according to exemplary embodiments.

According to exemplary embodiments, in one application, different composition inserts may be applied to a same part, e.g. the H-shaped block, with corresponding different brazing materials. In another application, a first insert material and a first brazing material may be used on the H-shaped block and second insert material, different from the first insert material, and a second brazing material, different from the first brazing material, may be used on a combustor liner stop.

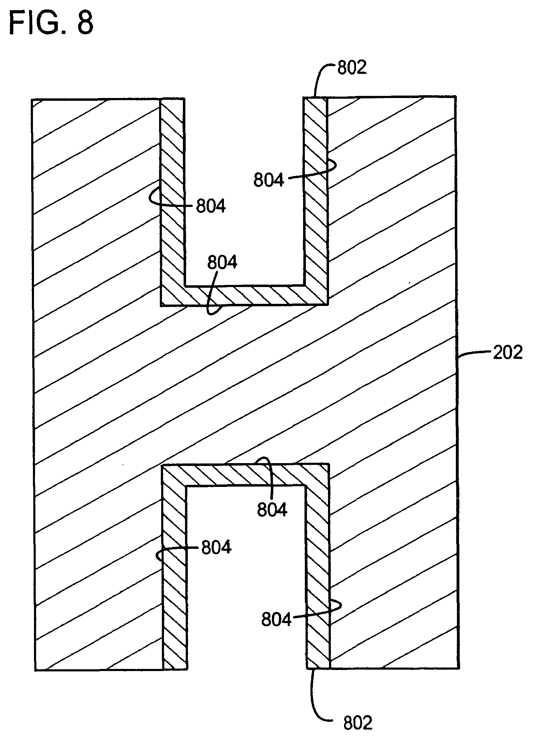

Exemplary inserts not according to the invention can be formed with the brazing powder mixed into the tungsten carbide powder. This combined powder is then exposed to pressure for compaction creating a tape-like substance, i.e., the combined powder is flexible yet has enough integrity to stick together while being applied to a wear surface. This tape-like substance is then applied to the desired wear surface and heat treated. During heat treat, the brazing powder in the combined powder diffuses into the base metal to fuse the tape-like substance to the base metal. At the same time, the tungsten carbide powder is sintered. Thus, according to this exemplary embodiment, the step of brazing and the step of sintering are performed simultaneously. An example of the tape-like substance 802 covering a wear section 804 of an H-shaped block 202 is shown in Figure 8. According to an alternative exemplary embodiment, a polymer may be added to the mixed brazing powder and tungsten carbide powder, in low concentrations, to increase the flexibility of the tape-like substance. Additionally, the volatile organic compounds in the low concentration polymer generally burns off during the heat treating process.

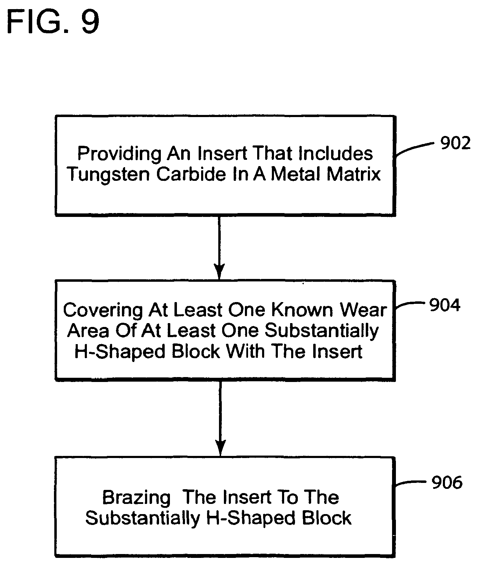

Utilizing the above-described exemplary systems according to exemplary embodiments, a method for reducing wear is shown in the flowchart of Figure 9. A method for reducing wear in a combustion system of a gas turbine includes: a step 902 of providing an insert that includes tungsten carbide in a metal matrix, where the metal matrix is selected from a group including cobalt and nickel; a step 904 of covering at least one known wear area of at least one substantially H-shaped block with the insert, where the at least one known wear area of the at least one substantially H-shaped block is located on an interior surface of the at least one substantially H-shaped block which includes a first surface substantially perpendicular to a second surface which is substantially perpendicular to a third surface, the third surface being substantially parallel to and having a substantially same surface area as the first surface; and a step 906 of brazing the insert to the substantially H-shaped block.

While using tungsten carbide for improved wear performance associated with parts of a gas turbine has been described in some of the exemplary embodiments described above, tungsten carbide in a metal matrix, e.g., cobalt or nickel, can be used for its properties in other applications. For example, using the tungsten carbide in a metal matrix, various shapes, sizes and thicknesses of pieces can be created during the sintering process as desired.

The above-described exemplary embodiments are intended to be illustrative in all respects, rather than restrictive, of the present invention. Thus the present invention is capable of many variations in detailed implementation that can be derived from the description contained herein by a person skilled in the art within the scope of the present invention as defined by the appended claims.

Also, as used herein, the article "a" is intended to include one or more items.

This written description uses examples of the subject matter disclosed to enable any person skilled in the art to practice the same, including making and using any devices or systems and performing any incorporated methods.

## Claims

1. A system for wear reduction in a combustion system of a gas turbine, said system comprising:
at least one substantially H-shaped block (202) configured to secure a transition piece (10) of a gas turbine combustor to a support piece (214);
a first insert (602,702) including a first tungsten carbide in a first metal matrix, wherein said first metal matrix is selected from a group comprising cobalt and nickel; and
a first brazing material (710) between said at least one substantially H-shaped block (202) and said first insert (602,702) said first brazing material being configured to braze said first insert (602, 702) to said at least one substantially H-shaped block (202) in at least one location on an interior wear surface of said at least one substantially H-shaped block (202),
wherein said interior surface of said at least one substantially H-shaped block (202) includes a first surface (606) substantially perpendicular to a second surface (608) which is substantially perpendicular to a third surface (610), said third surface (610) being substantially parallel to and having a substantially same surface area as said first surface (606).

2. The system of claim 1, further comprising:
at least one combustor liner stop (402) configured to attach to a combustors liner (6) of the gas turbine;
a second insert including a second tungsten carbide in a second metal matrix, wherein said second metal matrix is selected from a group comprising cobalt and nickel; and
a second brazing material between said at least one combustor liner (6) stop and said second insert, said second brazing material being configured to braze said second insert to said at least one combustor liner stop (402) in at least one location on an substantially U-shaped wear surface of said at least one combustor liner stop (402).

3. The system of claim 1 or claim 2, wherein a composition of said first or second or both tungsten carbides in said first or second or both metal matrices is in the range of 10 to 20 percent by weight.

4. The system of any preceding claim, wherein said first insert has a thickness greater than or equal to 1.0 mm.

5. The system of claim 1, wherein the insert includes either a cobalt matrix with tungsten carbide or a nickel matrix with tungsten carbide wherein said tungsten carbide comprises between 10 and 20 percent by weight of said insert.

6. A method for reducing wear in a combustion system of a gas turbine, said method comprising:
providing (902) an insert that includes tungsten carbide in a metal matrix, wherein said metal matrix is selected from a group comprising cobalt and nickel;
covering (904) at least one known wear area of at least one substantially H-shaped block (202) with said insert, wherein said at least one known wear area of said at least one substantially H-shaped block (202) is located on an interior surface of said at least one substantially H-shaped block (202) and includes a first surface (606) substantially perpendicular to a second surface (608) which is substantially perpendicular to a third surface (610), said third surface (610) being substantially parallel to and having a substantially same surface area as said first surface (606); and
brazing (906) said insert to said substantially H-shaped block (202).

7. The method of claim 6, wherein a composition of said tungsten carbide in said metal matrix is in the range of 10 to 20 percent by weight.

8. The method of claim 6 or claim 7, further comprising:
covering at least one known wear area of a combustor liner stop (402) with an insert (702); and
brazing said insert to said combustor liner stop (402).

9. The method of any of claims 6 to 8, further comprising:
forming said tungsten carbide in said metal matrix into said insert through a sintering process in a die.

## Patentansprüche

1. System zur Verschleißreduzierung in einem Verbrennungssystem einer Gasturbine, wobei das System Folgendes umfasst:
mindestens einen im Wesentlichen H-förmigen Block (202), der dafür ausgelegt ist, ein Übergangsstück (10) einer Gasturbinen-Brennkammer an einer Stütze (214) zu befestigen;
einen ersten Einsatz (602, 702), einschließlich einer ersten Wolframkarbidmenge in einer ersten-Metallmatrix, wobei die erste Metallmatrix aus einer Gruppe bestehend aus Kobalt und Nickel ausgewählt wird; und
ein erstes Hartlötmaterial (710) zwischen dem mindestens einen im Wesentlichen H-förmigen Blog (202) und dem ersten Einsatz (602, 702), wobei das erste Hartlötmaterial dafür ausgelegt ist, den ersten Einsatz (602, 702) an dem mindestens einen im Wesentlichen H-förmigen Blog (202) an mindestens einem Ort auf einer internen Verschleißfläche des mindestens einen im Wesentlichen H-förmigen Blocks (202) anzulöten,
wobei die innere Oberfläche des mindestens einen im wesentlichen H-förmigen Blocks (202) eine erste Fläche (606) umfasst, die im Wesentlichen senkrecht zu einer zweiten Fläche (608) ist, welche im Wesentlichen senkrecht zu einer dritten Fläche (610) ist, wobei die dritte Fläche (610) im Wesentlichen parallel ist zur erste Fläche (606) und einen im wesentlichen selben Flächenbereich wie diese hat.

2. System nach Anspruch 1, ferner umfassend:
mindestens einen Anschlag der Brennkammerauskleidung (402), der zum Befestigen an einer Brennkammerauskleidung (6) der Gasturbine ausgelegt ist;
einen zweiten Einsatz, einschließlich einer zweiten Wolframcarbidmenge in einer zweiten Metallmatrix, wobei die zweite Metallmatrix aus einer Gruppe bestehend aus Kobalt und Nickel ausgewählt wird; und
ein zweites Lötmaterial zwischen dem mindestens einen Anschlag der Brennkammerauskleidung (6) und dem zweiten Einsatz, wobei das zweite Lötmaterial dafür ausgelegt ist, den zweiten Einsatz an dem mindestens einen Anschlag der Brennkammerauskleidung (402) an mindestens einem Ort auf einer im wesentlichen U-förmigen Verschleißfläche des mindestens einen Anschlags der Brennkammerauskleidung (402) anzulöten.

3. System nach Anspruch 1 oder 2, wobei eine Zusammensetzung des ersten oder zweiten oder beider Wolframcarbidmaterialien in einer ersten oder zweiten oder beiden Metallmatrizen in Bereich von 10 bis 20 Gewichtsprozent liegt.

4. System nach einem der vorhergehenden Ansprüche, wobei der erste Einsatz eine Dicke von größer oder gleich 1,0 mm hat.

5. System nach Anspruch 1, wobei der Einsatz entweder eine Kobaltmatrix mit Wolframcarbid oder eine Nickelmatrix mit Wolframcarbid umfasst, wobei Wolframcarbid zwischen 10 und 20 Gewichtsprozent des Einsatzes umfasst.

6. Verfahren zum Reduzieren von Verschleiß in einem Verbrennungssystem einer Gasturbine, wobei das Verfahren Folgendes umfasst:
Bereitstellen (902) eines Einsatzes, der Wolframcarbid in einer Metallmatrix umfasst, wobei die Metallmatrix aus einer Gruppe bestehend aus Kobalt und Nickel ausgewählt wird;
Abdecken (904) von mindestens einer bekannten Verschleißfläche des mindestens einen im wesentlichen H-förmigen Blocks (202) mit einem Einsatz, wobei die mindestens eine bekannte Verschleißfläche des mindestens einen im wesentlichen H-förmigen Blocks (202) sich an einer Innenfläche des mindestens einen im wesentlichen H-förmigen Blocks (202) befindet und eine erste Fläche (606) im Wesentlichen senkrecht zu einer zweiten Fläche (608) umfasst, die im Wesentlichen senkrecht zu einer dritten Fläche (610) ist, wobei die dritte Fläche (610) im Wesentlichen parallel zur ersten Fläche (606) ist und eine im wesentlichen selbe Flächenausdehnung wie diese hat, und
Anlöten (906) des Einsatzes an den im Wesentlichen H-förmigen Block (202).

7. Verfahren nach Anspruch 6, wobei eine Zusammensetzung des Wolframcarbidmaterials in der Metallmatrix im Bereich von 10 bis 20 Gewichtsprozent liegt.

8. Verfahren nach Anspruch 6 oder 7, das ferner umfasst:
Abdecken von mindestens einer bekannten Verschleißfläche eines Anschlags der Brennkammerauskleidung (402) mit einem Einsatz (702); und
Anlöten des Einsatzes an den Anschlag der Brennkammerauskleidung (402).

9. Verfahren nach einem der Ansprüche 6 bis 8, ferner umfassend:
Bilden des Wolframcarbids in der Metallmatrix im Einsatz durch einen Sinterprozess in einer Pressform.

## Revendications

1. Système de réduction de l'usure dans un système de combustion d'une turbine à gaz, ledit système comprenant :
au moins un bloc sensiblement en forme de H (202) configuré pour fixer une pièce de transition (10) d'une chambre de combustion de turbine à gaz à une pièce de support (214) ;
un premier insert (602, 702) comprenant un premier carbure de tungstène dans une première matrice métallique, dans lequel ladite première matrice métallique est choisie dans le groupe comprenant le cobalt et le nickel ; et
un premier matériau de brasage (710) entre ledit au moins un bloc sensiblement en forme de H (202) et ledit premier insert (602, 702), ledit premier matériau de brasage étant configuré pour braser ledit premier insert (602,702) audit au moins un bloc sensiblement en forme de H (202) dans au moins un emplacement sur une surface d'usure intérieure dudit au moins un bloc sensiblement en forme de H (202) ;
dans lequel ladite surface intérieure dudit au moins un bloc sensiblement en forme de H (202) comprend une première surface (606) sensiblement perpendiculaire à une deuxième surface (608) qui est sensiblement perpendiculaire à une troisième surface (610), ladite troisième surface (610) étant sensiblement parallèle à ladite première surface (606) et ayant une aire sensiblement la même que celle-ci.

2. Système selon la revendication 1, comprenant en outre :
au moins un arrêt de chemise de chambre de combustion (402) configuré pour se fixer à une chemise (6) de la chambre de combustion de la turbine à gaz ;
un second insert comprenant un second carbure de tungstène dans une seconde matrice métallique, dans lequel ladite seconde matrice métallique est choisie dans un groupe comprenant le cobalt et le nickel ; et
un second matériau de brasage entre ledit au moins un arrêt de la chemise (6) de la chambre de combustion et ledit second insert, ledit second matériau de brasage étant configuré pour braser ledit second insert audit au moins un arrêt (402) de la chemise de la chambre de combustion dans au moins un emplacement sur une surface d'usure sensiblement en forme de U dudit au moins un arrêt (402) de la chemise de la chambre de combustion.

3. Système selon la revendication 1 ou la revendication 2, dans lequel une composition dudit premier ou dudit second ou des deux carbures de tungstène de ladite première ou de ladite seconde ou desdites deux matrices métalliques se situe dans la plage de 10 à 20 pour cent en poids.

4. Système selon l'une quelconque des revendications précédentes, dans lequel ledit premier insert a une épaisseur supérieure ou égale à 1,0 mm.

5. Système selon la revendication 1, dans lequel l'insert comprend une matrice de cobalt avec du carbure de tungstène ou une matrice de nickel avec du carbure de tungstène, dans lequel ledit carbure de tungstène constitue entre 10 et 20 pour cent en poids dudit insert.

6. Procédé de réduction de l'usure dans un système de combustion d'une turbine à gaz, ledit procédé comprenant les étapes consistant à :
fournir (902) un insert qui comprend du carbure de tungstène dans une matrice métallique, dans lequel ladite matrice métallique est choisie dans un groupe comprenant le cobalt et le nickel ;
recouvrir (904) au moins une surface d'usure connue d'au moins un bloc sensiblement en forme de H (202) par ledit insert, dans lequel ladite au moins une surface d'usure connue dudit au moins un bloc sensiblement en forme de H (202) est située sur une surface intérieure dudit au moins un bloc sensiblement en forme de H (202) et comprend une première surface (606) sensiblement perpendiculaire à une deuxième surface (608) qui est sensiblement perpendiculaire à une troisième surface (610), ladite troisième surface (610) étant sensiblement parallèle à ladite première surface (606) et ayant une aire sensiblement identique à celle-ci ; et
braser (906) ledit insert audit bloc sensiblement en forme de H (202).

7. Procédé selon la revendication 6, dans lequel une composition dudit carbure de tungstène dans ladite matrice métallique se situe dans la plage de 10 à 20 pour cent en poids.

8. Procédé selon la revendication 6 ou la revendication 7, comprenant en outre :
le recouvrement d'au moins une surface d'usure connue d'un arrêt (402) de la chemise de la chambre de combustion par un insert (702) ; et
le brasage dudit insert audit arrêt (402) de la chemise de la chambre de combustion.

9. Procédé selon l'une quelconque des revendications 6 à 8, comprenant en outre :
la formation dudit carbure de tungstène dans ladite matrice métallique dans ledit insert via un procédé de frittage dans une matrice.
